# EUROPÄISCHE PATENTANMELDUNG

(11) **EP 4 279 315 A2**
(43) Veröffentlichungstag der Anmeldung: **22.11.2023**
(21) Anmeldenummer: 23165875.8
(22) Anmeldetag: 31.03.2023
(51) Int. Cl.: B60K 35/00

(54) **ANZEIGEVORRICHTUNG, ARMATURENTAFEL UND FORTBEWEGUNGSMITTEL**

(30) Priorität: 20.05.2022 DE 102022205052
(71) Anmelder: Continental Automotive Technologies GmbH, 30165 Hannover (DE)
(72) Erfinder: Koch, Marcus, 60488 Frankfurt am Main (DE)
(74) Vertreter: Continental Corporation

(57) **Zusammenfassung**

Die vorliegende Erfindung betrifft eine Anzeigevorrichtung (1) sowie eine Armaturentafel mit einer solchen Anzeigevorrichtung (1). Die Erfindung betrifft zudem ein Fortbewegungsmittel mit einer solchen Armaturentafel. Die Anzeigevorrichtung (1) weist eine Displaybaugruppe (2) mit einem Anzeigepaneel (3) und ein Gehäuse (5) zur Aufnahme der Displaybaugruppe (2) auf. Das Gehäuse (5) weist nachgiebige bistabile Befestigungselemente (50) auf. Diese sind derart ausgestaltet, dass sie die Anzeigevorrichtung (1) im Ansprechen auf eine Bewegung einer Lenksäule (21) des Fortbewegungsmittels (20) aus einem Kollisionsbereich mit der Lenksäule (21) oder einem Lenkrad (22) bewegen.

## Beschreibung

Die vorliegende Erfindung betrifft eine Anzeigevorrichtung sowie eine Armaturentafel mit einer solchen Anzeigevorrichtung. Die Erfindung betrifft zudem ein Fortbewegungsmittel mit einer solchen Armaturentafel.

In modernen Kraftfahrzeugen werden oftmals Anzeigevorrichtungen zur Darstellung der relevanten Fahrinformationen genutzt, die die klassischen Zeigerinstrumente nach und nach verdrängen. Diese Anzeigevorrichtungen sind typischerweise in der Armaturentafel hinter dem Lenkrad angeordnet.

Allerdings wird die Lenksäule im Falle eines Unfalls durch die Kraft des im Lenkrad befindlichen Airbags in die Armaturentafel gedrückt. Bei dieser Bewegung besteht die Gefahr, dass die Abdeckung der Lenksäule auf den Rand der Anzeigevorrichtung trifft und diese zerstört. Um in diesem Fall das Splittern von Glas zu vermeiden, wird üblicherweise eine Kinematik gefordert, die schon bei der ersten Bewegung der Lenksäule ausgelöst wird und die Anzeigevorrichtung automatisch aus dem Kollisionsbereich der Lenksäule bewegt.

Bei heutigen Lösungen wird die Kraft für diese Bewegung von einer oder mehreren starken Federn bereitgestellt. Diese stehen während der gesamten Lebensdauer des Produkts unter Spannung, bis es zu einem Unfall kommt. Die Federn müssen stark genug sein, um das Gewicht der Anzeigevorrichtung einschließlich seines Deckglases und des kinematischen Trägers innerhalb einer sehr kurzen Zeitspanne anzuheben, um die Kollision zu vermeiden. Die Auslösung erfolgt in der Regel durch eine Sollbruchstelle in der Kinematik, so dass die Federspannung vom nicht ausgelösten kinematischen Träger aufgenommen wird.

In diesem Zusammenhang beschreibt DE 10 2018 110 548 A1 eine Displayanordnung für ein Kraftfahrzeug, umfassend ein in Fahrzeughochrichtung über einer Lenksäule angeordnetes Display, eine Führung, an welcher das Display derart translatorisch oder rotatorisch beweglich gelagert ist, dass es aus einer Gebrauchsstellung, in welcher das Display eine Eintauchbewegung der Lenksäule in Lenksäulenlängsrichtung behindert, von der Lenksäule wegbewegt werden kann, sowie einen Mechanismus zum Fixieren des Displays in der Gebrauchsstellung, welcher derart ausgelegt ist, dass das Display der Eintauchbewegung der Lenksäule keine Kraft entgegensetzt, welche größer als eine vorgegebene Kraft ist.

Die beschriebene Lösung benötigt einen zusätzlichen kinematischen Träger, der zwischen dem Gehäuse der Anzeigevorrichtung und der Befestigung der Armaturentafel angeordnet ist. Zudem sind eine oder mehrere Federn und Befestigungselemente erforderlich.

Es ist eine Aufgabe der Erfindung, vereinfachte Lösungen zum Schutz einer Anzeigevorrichtung eines Fortbewegungsmittels für den Fall eines Unfalls bereitzustellen.

Diese Aufgabe wird durch eine Anzeigevorrichtung mit den Merkmalen des Anspruchs 1, durch eine Armaturentafel gemäß Anspruch 9 und durch ein Fortbewegungsmittel gemäß Anspruch 10 gelöst. Bevorzugte Ausgestaltungen der Erfindung sind Gegenstand der abhängigen Ansprüche.

Gemäß einem ersten Aspekt der Erfindung weist eine Anzeigevorrichtung auf:
- eine Displaybaugruppe mit einem Anzeigepaneel; und
- ein Gehäuse zur Aufnahme der Displaybaugruppe;
wobei das Gehäuse nachgiebige bistabile Befestigungselemente aufweist, die derart ausgestaltet sind, dass sie die Anzeigevorrichtung im Ansprechen auf eine Bewegung einer Lenksäule des Fortbewegungsmittels aus einem Kollisionsbereich mit der Lenksäule oder einem Lenkrad bewegen.

Bei der erfindungsgemäßen Lösung wird auf eine komplexe Kinematik oder die Verwendung zusätzlicher Federn verzichtet. Stattdessen werden bistabile Befestigungselemente verwendet, die anstelle einer Materialelastizität eine geometrische Elastizität nutzen, um eine Bewegung zu bewirken. Eine Führung der Bewegung der Anzeigevorrichtung kann dabei allein durch die geometrische Ausgestaltung der bistabilen Elemente erfolgen. Da auf eine Führung verzichten werden kann, spielt Reibung keine Rolle. Zudem werden weniger Teile benötigt, so dass der Montageprozess vereinfacht wird und sich die Kosten reduzieren. Ein weiterer Vorteil der Verwendung bistabiler Befestigungselemente besteht darin, dass die zum Umspringen zwischen den stabilen Zuständen erforderliche Kraft sehr gut kontrollierbar ist, was bei einer Sollbruchstelle nicht der Fall ist,

Gemäß einem Aspekt der Erfindung sind die nachgiebigen bistabilen Befestigungselemente ausgestaltet, eine Verschiebung der Anzeigevorrichtung nach oben oder eine Drehung der Anzeigevorrichtung um eine horizontale Achse zu bewirken. Eine Bewegung der Anzeigevorrichtung aus dem Kollisionsbereich kann sowohl durch eine Verschiebung der Anzeigevorrichtung nach oben, also in z-Richtung, als auch durch eine Drehung der Anzeigevorrichtung um eine horizontale Achse erreicht werden, bei der sich die untere Kante der Anzeigevorrichtung ebenfalls in z-Richtung verschiebt. Die horizontale Achse liegt dabei vorzugsweise im Bereich der oberen Kante der Anzeigevorrichtung.

Gemäß einem Aspekt der Erfindung beträgt eine zum Auslösen der Bewegung erforderliche Kraft mindestens 500 N. Eine Auslösekraft in dieser Größe macht eine versehentliche Auslösung der Bewegung unwahrscheinlich. Zudem werden unerwünschte Vibrationen im Betrieb des Fortbewegungsmittels vermieden, so dass es nicht zu einer störenden Geräuschentwicklung kommt.

Gemäß einem Aspekt der Erfindung sind die nachgiebigen Befestigungselemente integraler Bestandteil des Gehäuses. Dies hat den Vorteil, dass keine zusätzlichen Teile benötigt werden und somit auch keine zusätzlichen Werkzeuge oder Produktionsschritte. Dies führt zu einer robusteren Toleranzkette für die Anzeigevorrichtung sowie eventuelle Spalten zu angrenzenden Bauteilen. Zugleich werden keine unterschiedlichen Materialien kombiniert, was die potentiell störenden Auswirkungen von Temperaturänderungen reduziert, z.B. Verformungen oder den daraus resultierenden Mura-Effekt. Auch Korrosionsrisiken werden reduziert. Die nachgiebigen Befestigungselemente können im Rahmen der Produktion z.B. durch die Verwendung einer geeigneten Gussform oder durch eine nachträgliche Ausstanzung erzeugt werden.

Gemäß einem Aspekt der Erfindung sind das Gehäuse und die nachgiebigen Befestigungselemente aus einem Material auf Magnesiumbasis gefertigt. Magnesium ist ein häufig im Automobilbereich verwendetes Material, das insbesondere für Gehäuse von Anzeigevorrichtungen Verwendung findet. Natürlich können aber auch andere Materialien verwendet werden.

Gemäß einem Aspekt der Erfindung realisieren die bistabilen Elemente einen Biegeknickmechanismus, einen Drillknickmechanismus oder einen Biegedrillknickmechanismus. Bei diesen Mechanismen schnappt oder springt ein Arm eines bistabilen Elements bei Ausübung einer ausreichenden Kraft von einem stabilen ersten Zustand in einen stabilen zweiten Zustand. Dieses schnelle Umspringen führt zu einer großen Beschleunigung des Gehäuses gegenüber den Befestigungspunkten. Bei einem Biegeknickmechanismus wird eine lediglich translatorische Bewegung bewirkt, bei einem Drillknickmechanismus wird stattdessen eine rotatorische Bewegung bewirkt. Ein Biegedrillknickmechanismus kombiniert eine translatorische und eine rotatorische Bewegung. Das initiale Eintauchen der Lenksäule ist in allen Fällen nur der Auslöser für die Bewegung, der Mechanismus beschleunigt diese im Anschluss.

Gemäß einem Aspekt der Erfindung ist eine Armlänge der bistabilen Elemente so gewählt, dass der resultierende elastische Verformungsweg ein Umspringen von einem ersten Zustand in einen zweiten Zustand ermöglicht. Magnesium ist ein recht sprödes Material, das nur wenig elastisch ist. Falls das Gehäuse und die bistabilen Elemente aus einem Material auf Magnesiumbasis gefertigt sind, werden große Hebelarme benötigt, um den für das Umspringen erforderlichen elastischen Verformungsweg zu erzielen.

Gemäß einem Aspekt der Erfindung werden die bistabilen Elemente beim Umspringen vom ersten Zustand in den zweiten Zustand über die Streckgrenze hinaus belastet. Dies sorgt dafür, dass die bistabilen Elemente nach dem Umspringen nicht mehr funktionsfähig für diese Bewegung und daher kein Zweites Mal zu benutzen sind. Selbst wenn man die bistabilen Elemente zurückschnappen lassen könnte, wäre die Kaltverfestigung der bistabilen Elemente problematisch. Das ist aber ein Zustand, der für einen erfolgten Unfall völlig untergeordnet ist. Vielmehr ist es sogar sicherheitsrelevant, dass das Auslösen des Mechanismus deutlich erkennbar und dieser klar nicht mehr nutzbar ist. Ein einmal ausgelöster Mechanismus muss zwingen ausgetauscht werden, denn die korrekte Funktion wäre bei einem zweiten Auslösen nicht mehr sicher gewährleistet.

Vorzugsweise wird eine erfindungsgemäße Anzeigevorrichtung in einer Armaturentafel für ein Fortbewegungsmittel eingesetzt. Die Anzeigevorrichtung kann dabei mittels der nachgiebigen Befestigungselemente an zugeordneten Befestigungspunkten der Armaturentafel befestigt sein. Eine solche Armaturentafel bietet einen verbesserten Splitterschutz für die Anzeigevorrichtung und somit einen verbesserten Schutz für die Insassen des Fortbewegungsmittels.

Eine erfindungsgemäße Armaturentafel wird vorzugsweise in einem Fortbewegungsmittel eingesetzt. Bei dem Fortbewegungsmittel kann es sich beispielsweise um ein Kraftfahrzeug handeln, alternativ aber auch um ein Luftfahrzeug, ein Schienenfahrzeug oder ein Wasserfahrzeug.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch eine Anzeigevorrichtung für ein Fortbewegungsmittel mit einem bekannten Schutzmechanismus;
- Fig. 2: zeigt schematisch eine erfindungsgemäße Anzeigevorrichtung;
- Fig. 3: zeigt schematisch die Funktionsweise einer ersten Ausführungsform eines nachgiebigen bistabilen Mechanismus;
- Fig. 4: zeigt schematisch die Funktionsweise einer zweiten Ausführungsform eines nachgiebigen bistabilen Mechanismus;
- Fig. 5: zeigt schematisch die Funktionsweise einer dritten Ausführungsform eines nachgiebigen bistabilen Mechanismus; und
- Fig. 6: zeigt schematisch ein Fortbewegungsmittel, das eine erfindungsgemäße Anzeigevorrichtung nutzt.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

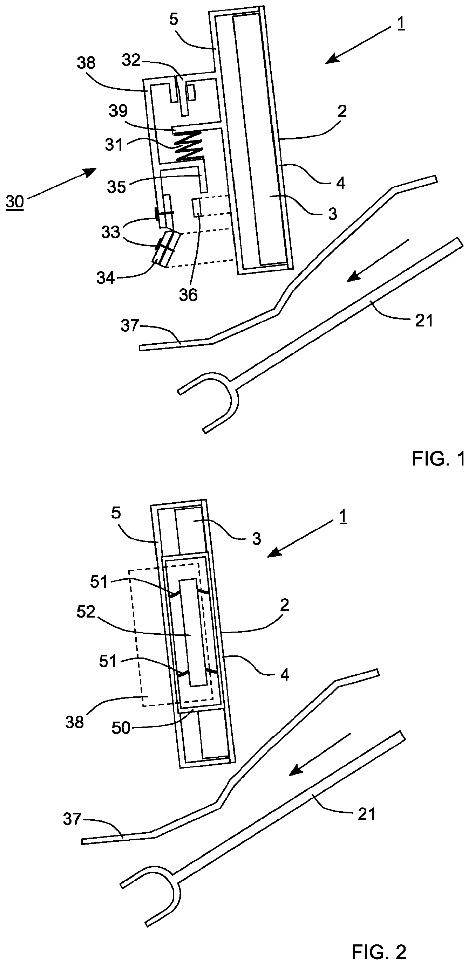

Fig. 1 zeigt schematisch eine Anzeigevorrichtung 1 für ein Fortbewegungsmittel mit einem bekannten Schutzmechanismus 30. Dargestellt ist eine Seitenansicht. Die Anzeigevorrichtung 1 weist eine Displaybaugruppe 2 mit einem Anzeigepaneel 3 und einem Deckglas 4 auf, die in einem Gehäuse 5 angeordnet sind. Das Gehäuse ist mit mehreren Elementen an einer Halterung 38 befestigt. Ein oberes Befestigungselement 32 ist beweglich in die Halterung 38 eingesteckt. Eine Schraublasche 34 mit einer Sollbruchstelle stellt mittels zweier Verschraubungen 33 eine feste Verbindung zwischen dem Gehäuse 5 und der Halterung 38 her. Eine zwischen der Halterung 38 und einem Anschlag 39 des Gehäuses 5 angeordnete gespannte Druckfeder 31 sorgt für eine Vorspannung, die für eine Bewegung der Anzeigevorrichtung 1 genutzt werden kann. Im Falle eines Unfalls verschiebt sich die Lenksäule 21 im Wesentlichen in Längsrichtung des Fortbewegungsmittels. Dabei wird das Gehäuse mitbewegt, bis es zu einem Bruch der Sollbruchstelle kommt. Sobald dies geschieht, wird die Anzeigevorrichtung 1 von der Druckfeder 31 in z-Richtung bewegt, so dass das Deckglas 4 der Anzeigevorrichtung 1 nicht mit einer Abdeckung 37 der Lenksäule 21 kollidiert. Ein Fanghaken 35 an der Halterung 38 sorgt dabei in Kombination mit einem Fangelement 36 am Gehäuse 4 dafür, dass die Anzeigevorrichtung 1 auch nach der Verschiebung gehalten wird.

Fig. 2 zeigt schematisch eine erfindungsgemäße Anzeigevorrichtung 1. Dargestellt ist eine Seitenansicht. Die Anzeigevorrichtung 1 weist eine Displaybaugruppe 2 mit einem Anzeigepaneel 3 und einem Deckglas 4 auf, die in einem Gehäuse 5 angeordnet sind. Das Gehäuse ist in diesem Fall allerdings mit mehreren nachgiebigen bistabilen Befestigungselementen 50 an einer Halterung 38 befestigt. Die nachgiebigen bistabilen Befestigungselemente 50 sorgen einerseits für eine stabile Befestigung der Anzeigevorrichtung 1 in ihrer normalen Gebrauchsposition, andererseits bewirken sie aber auch eine Bewegung der Anzeigevorrichtung 1 in z-Richtung im Falle eines Unfalls. Im dargestellten Beispiel weisen die nachgiebigen bistabilen Befestigungselemente 50 jeweils vier Arme 51 auf, die ein bewegliches zentrales Element 52 in einer stabilen ersten Position halten. Das zentrale Element 52 ist mit der Halterung 38 verschraubt. Im Falle eines Unfalls verschiebt sich die Lenksäule 21 im Wesentlichen in Längsrichtung des Fortbewegungsmittels. Dabei wird das Gehäuse 5 in z-Richtung verschoben, z.B. mittels eines Hebels oder einer geeigneten Anschlagfläche. Nach einer initialen Verschiebung in z-Richtung springen bzw. schnappen die Arme 51 in eine stabile zweite Position, wodurch das Gehäuse 5 weiter nach oben bewegt wird. Auf diese Weise wird dafür gesorgt, dass das Deckglas 4 der Anzeigevorrichtung 1 nicht mit einer Abdeckung 37 der Lenksäule 21 kollidiert.

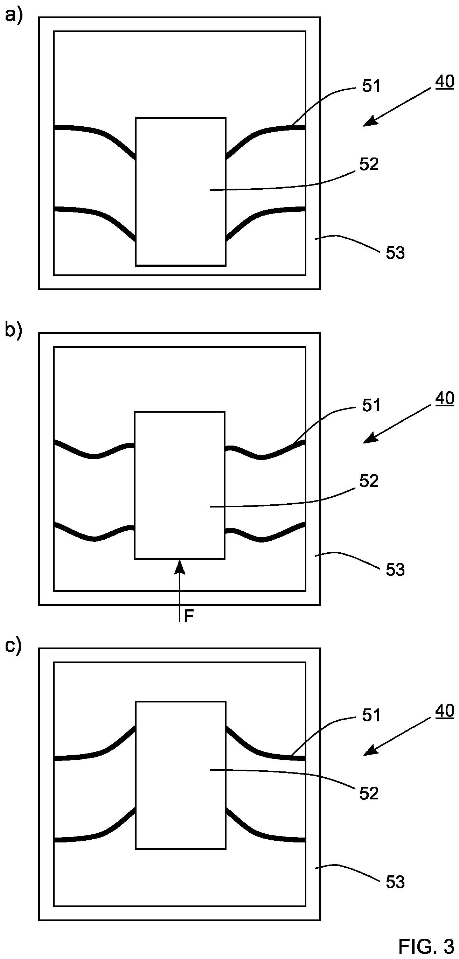

Fig. 3 zeigt schematisch die Funktionsweise einer ersten Ausführungsform eines nachgiebigen bistabilen Mechanismus 40. In diesem Fall sind vier elastische Arme 51 vorgesehen, die ein zentrales Element 52 in Bezug auf einen Rahmen 53 fixieren. Fig. 3a) zeigt die Situation nach der Anfertigung des nachgiebigen bistabilen Mechanismus. Die Arme 51 sind entspannt und das zentrale Element 52 befindet sich in Bezug auf den Rahmen 53 in einer stabilen ersten Position. Die Spannungsfreiheit der Arme 51 wird dadurch erreicht, dass sich die Arme 51 genau in der Position befinden, in der sie bei der Herstellung ausgestanzt oder gegossen wurden. Wird nun, wie in Fig. 3b) dargestellt, eine Kraft F auf das zentrale Element 52 ausgeübt, wird das zentrale Element 52 in eine instabile Zwischenposition bewegt. Dabei stehen die Arme 51 unter Spannung. Überschreitet die Kraft F eine erforderliche Auslösekraft, springen bzw. schnappen die Arme 51 in eine stabile zweite Position. Dies ist in Fig. 3c) dargestellt. In dieser stabilen zweiten Position sind die Arme 51 nunmehr wieder entspannt. Durch das in Fig. 3 gezeigte Umspringen der Arme 51 wird ein Biegeknickmechanismus realisiert. Der nachgiebige bistabile Mechanismus kann nun genutzt werden, um eine translatorische Bewegung einer Anzeigevorrichtung zu realisieren. Zu diesem Zweck kann das zentrale Element 52 beispielsweise auf der Rückseite der Anzeigevorrichtung befestigt sein. In diesem Fall bildet jeder Arm 51 ein nachgiebiges bistabiles Befestigungselement 50. Ebenso ist es möglich, an zwei gegenüberliegenden Seiten der Anzeigevorrichtung jeweils zumindest einen nachgiebigen bistabilen Mechanismus 40 vorzusehen, z.B. indem das zentrale Element 52 mit dem Gehäuse der Anzeigevorrichtung verschraubt wird. In diesem Fall bildet der gesamte nachgiebige bistabile Mechanismus 40 jeweils ein nachgiebiges bistabiles Befestigungselement 50.

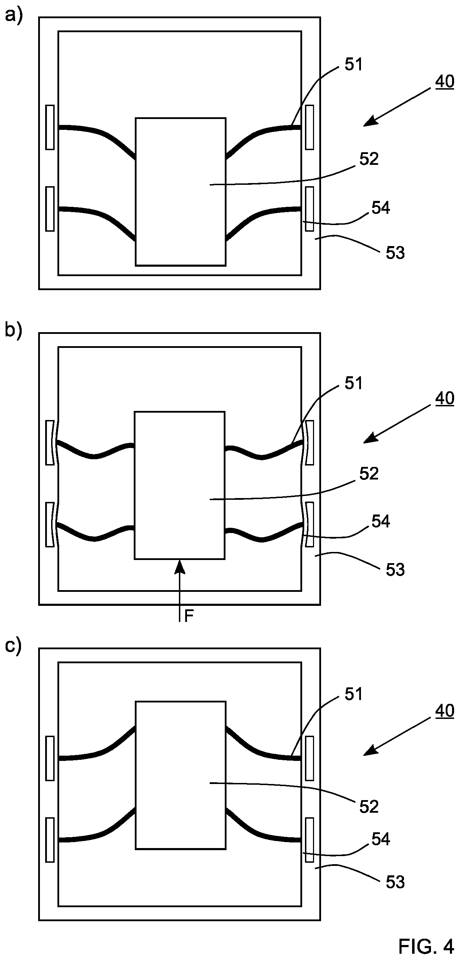

Fig. 4 zeigt schematisch die Funktionsweise einer zweiten Ausführungsform eines nachgiebigen bistabilen Mechanismus 40. Auch in diesem Fall sind vier elastische Arme 51 vorgesehen, die ein zentrales Element 52 in Bezug auf einen Rahmen 53 fixieren. Zusätzlich weist der nachgiebige bistabile Mechanismus 40 für jeden Arm 51 noch eine flexible Schulter 54 auf. Fig. 4a) zeigt die Situation nach der Anfertigung des nachgiebigen bistabilen Mechanismus. Die Arme 51 und die flexiblen Schultern 54 sind entspannt und das zentrale Element 52 befindet sich in Bezug auf den Rahmen 53 in einer stabilen ersten Position. Wird nun, wie in Fig. 4b) dargestellt, eine Kraft F auf das zentrale Element 52 ausgeübt, wird das zentrale Element 52 in eine instabile Zwischenposition bewegt. Dabei stehen die Arme 51 und die flexiblen Schultern 54 unter Spannung. Überschreitet die Kraft F eine erforderliche Auslösekraft, springen bzw. schnappen die Arme 51 in eine stabile zweite Position. Dies ist in Fig. 4c) dargestellt. In dieser stabilen zweiten Position sind die Arme 51 und die flexiblen Schultern 54 nunmehr wieder entspannt.

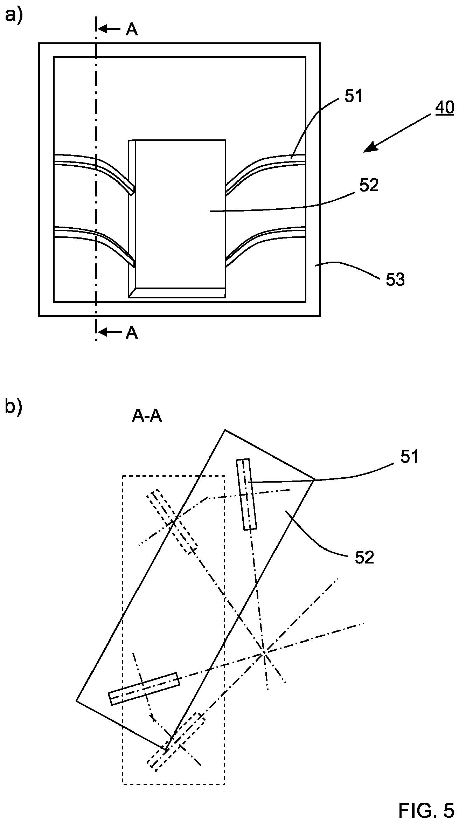

Fig. 5 zeigt schematisch die Funktionsweise einer dritten Ausführungsform eines nachgiebigen bistabilen Mechanismus 40. Wiederum sind vier elastische Arme 51 vorgesehen, die ein zentrales Element 52 in Bezug auf einen Rahmen 53 fixieren. Fig. 5a) zeigt die Situation nach der Anfertigung des nachgiebigen bistabilen Mechanismus. Die Arme 51 sind entspannt und das zentrale Element 52 befindet sich in Bezug auf den Rahmen 53 in einer stabilen ersten Position. Allerdings sind die Arme 51 in sich verdreht. Wird nun eine Kraft auf das zentrale Element 52 ausgeübt, wird das zentrale Element 52 in eine instabile Zwischenposition bewegt. Dabei stehen die Arme 51 unter Spannung. Überschreitet die Kraft eine erforderliche Auslösekraft, springen bzw. schnappen die Arme 51 in eine stabile zweite Position. Dies ist in Fig. 5b) zu sehen, die einen Schnitt entlang der Achse A-A durch den nachgiebigen bistabilen Mechanismus 40 zeigt. In dieser stabilen zweiten Position sind die Arme 51 nunmehr wieder entspannt. Zum Vergleich ist die erste Position gestrichelt dargestellt. Durch das in Fig. 5 gezeigte Umspringen der Arme 51 wird ein Drillknickmechanismus realisiert. Der nachgiebige bistabile Mechanismus kann nun genutzt werden, um eine rotatorische Bewegung einer Anzeigevorrichtung zu realisieren. Zu diesem Zweck kann das zentrale Element 52 beispielsweise auf der Rückseite der Anzeigevorrichtung befestigt sein. In diesem Fall bildet jeder Arm 51 ein nachgiebiges bistabiles Befestigungselement 50.

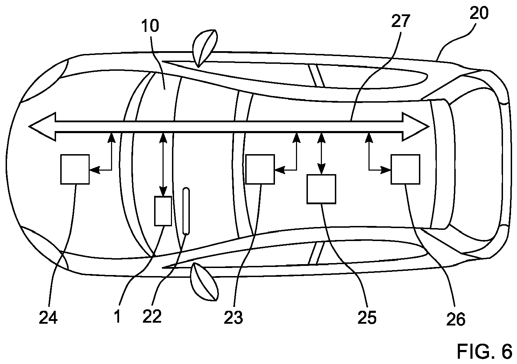

Fig. 6 zeigt schematisch ein Fortbewegungsmittel 20, das eine erfindungsgemäße Anzeigevorrichtung 1 nutzt. Bei dem Fortbewegungsmittel 20 handelt es sich in diesem Beispiel um ein Kraftfahrzeug. Das Kraftfahrzeug weist eine erfindungsgemäße Anzeigevorrichtung 1 auf, die hinter dem Lenkrad 22 in einer Armaturentafel 10 angeordnet ist. Mit einer Sensorik 23 können Daten zur Fahrzeugumgebung erfasst werden. Die Sensorik 23 kann insbesondere Sensoren zur Umfelderkennung umfassen, z.B. Ultraschallsensoren, Laserscanner, Radarsensoren, Lidarsensoren oder Kameras. Die von der Sensorik 23 erfassten Informationen können genutzt werden, um anzuzeigende Inhalte für die Anzeigevorrichtung 1 zu generieren. Weitere Bestandteile des Kraftfahrzeugs sind in diesem Beispiel ein Navigationssystem 24, durch das Positionsinformationen bereitgestellt werden können, sowie eine Datenübertragungseinheit 25. Mittels der Datenübertragungseinheit 25 kann z.B. eine Verbindung zu einem Backend aufgebaut werden, beispielsweise um aktualisierte Software für Komponenten des Kraftfahrzeugs zu beziehen. Zur Speicherung von Daten ist ein Speicher 26 vorhanden. Der Datenaustausch zwischen den verschiedenen Komponenten des Kraftfahrzeugs erfolgt über ein Netzwerk 27.

### Bezugszeichenliste

- 1: Anzeigevorrichtung
- 2: Displaybaugruppe
- 3: Anzeigepaneel
- 4: Deckglas
- 5: Gehäuse
- 50: Nachgiebiges bistabiles Befestigungselement
- 51: Arm
- 52: Zentrales Element
- 53: Rahmen
- 54: Flexible Schulter
- 10: Armaturentafel
- 20: Fortbewegungsmittel
- 21: Lenksäule
- 22: Lenkrad
- 23: Sensorik
- 24: Navigationssystem
- 25: Datenübertragungseinheit
- 26: Speicher
- 27: Netzwerk
- 30: Schutzmechanismus
- 31: Feder
- 32: Befestigungselement
- 33: Verschraubung
- 34: Schraublasche
- 35: Fanghaken
- 36: Fangelement
- 37: Abdeckung
- 38: Halterung
- 39: Anschlag
- 40: Nachgiebiger bistabiler Mechanismus

## Patentansprüche

1. Anzeigevorrichtung (1) für ein Fortbewegungsmittel (20), mit:
- einer Displaybaugruppe (2) mit einem Anzeigepaneel (3); und
- einem Gehäuse (5) zur Aufnahme der Displaybaugruppe (2);
wobei das Gehäuse (5) nachgiebige bistabile Befestigungselemente (50) aufweist, die derart ausgestaltet sind, dass sie die Anzeigevorrichtung (1) im Ansprechen auf eine Bewegung einer Lenksäule (21) des Fortbewegungsmittels (20) aus einem Kollisionsbereich mit der Lenksäule (21) oder einem Lenkrad (22) bewegen.

2. Anzeigevorrichtung (1) gemäß Anspruch 1, wobei die nachgiebigen bistabilen Befestigungselemente (50) ausgestaltet sind, eine Verschiebung der Anzeigevorrichtung (1) nach oben oder eine Drehung der Anzeigevorrichtung (1) um eine horizontale Achse zu bewirken.

3. Anzeigevorrichtung (1) gemäß Anspruch 1 oder 2, wobei eine zum Auslösen der Bewegung erforderliche Kraft mindestens 500 N beträgt.

4. Anzeigevorrichtung (1) gemäß einem der vorherigen Ansprüche, wobei die nachgiebigen bistabilen Befestigungselemente (50) integraler Bestandteil des Gehäuses (5) sind.

5. Anzeigevorrichtung (1) gemäß einem der vorherigen Ansprüche, wobei das Gehäuse (5) und die nachgiebigen bistabilen Befestigungselemente (50) aus einem Material auf Magnesiumbasis gefertigt sind.

6. Anzeigevorrichtung (1) gemäß einem der vorherigen Ansprüche, wobei die nachgiebigen bistabilen Befestigungselemente (50) einen Biegeknickmechanismus, einen Drillmechanismus oder einen Biegedrillknickmechanismus realisieren.

7. Anzeigevorrichtung (1) gemäß einem der vorherigen Ansprüche, wobei eine Armlänge der nachgiebigen bistabilen Befestigungselemente (50) so gewählt ist, dass der resultierende elastische Verformungsweg ein Umspringen von einem ersten Zustand in einen zweiten Zustand ermöglicht.

8. Anzeigevorrichtung (1) gemäß Anspruch 7, wobei die nachgiebigen bistabilen Befestigungselemente (50) beim Umspringen vom ersten Zustand in den zweiten Zustand über die Streckgrenze hinaus belastet werden.

9. Armaturentafel (10) für ein Fortbewegungsmittel (20), mit einer Anzeigevorrichtung (1) gemäß einem der Ansprüche 1 bis 8, wobei die Anzeigevorrichtung (1) mittels der nachgiebigen bistabilen Befestigungselemente (50) an zugeordneten Befestigungspunkten der Armaturentafel (10) befestigt ist.

10. Fortbewegungsmittel (20) mit einer Armaturentafel (10) gemäß Anspruch 9.
